# EUROPEAN PATENT SPECIFICATION

(11) **EP 3 465 179 B1**
(45) Date of publication and mention of the grant of the patent: **08.04.2020**
(21) Application number: 17737036.8
(22) Date of filing: 17.05.2017
(51) Int. Cl.: G01N 23/083, A24C 5/34

(54) **APPARATUS FOR IDENTIFICATION OF PHYSICAL PARAMETERS OF ROD-LIKE ARTICLES OF THE TOBACCO INDUSTRY**
VORRICHTUNG ZUR IDENTIFIZIERUNG VON PHYSIKALISCHEN PARAMETERN VON STABFÖRMIGEN ARTIKELN DER TABAKVERARBEITENDEN INDUSTRIE
APPAREIL D'IDENTIFICATION DE PARAMÈTRES PHYSIQUES D'ARTICLES EN FORME DE BÂTONNET DE L'INDUSTRIE DU TABAC

(30) Priority: 03.06.2016 PL 41739216
(43) Date of publication of application: 10.04.2019
(73) Proprietor: International Tobacco Machinery Poland SP. Z O.O., 26-600 Radom (PL)
(72) Inventor: STOLARSKI, Krzysztof, 26-600 Radom (PL)
(74) Representative: Markieta, Jaroslaw Franciszek
(86) International application number: PCT/IB2017/052904
(87) International publication number: WO 2017/208103

(56) References cited:
- EP-A1- 0 766 518
- WO-A1-2012/080686
- WO-A1-2014/009482
- WO-A2-2015/039851
- WO-A2-2015/063284
- US-A- 5 762 075

## Description

The subject of the invention is an apparatus for identification of physical parameters of rod-like articles of the tobacco industry.

Tobacco industry products including cigarettes, cigarillos, cigars, filter rods made of a single filtering material, multi-segment rods comprising multiple segments, and all types of semi-finished products processed at particular stages of production may be referred to by a common name - rod-like articles. Some rod-like articles, such as filter rods and filter cigarettes, may contain capsules with an aromatic substance. In the tobacco industry the quality of rod-like articles is an exceptionally important issue. Quality control may be performed by random selection or may be applied to all articles produced. Quality control concerns both the appearance and the dimensions of the articles, and in the case of articles containing capsules, the level of filling of the capsules is significant. In the case of quality control concerning the content of articles, for example the position and the dimensions of segments in multi-segment filter rods or the position of capsules in filter rods or finished cigarettes, it is necessary to image the articles using radiation. Here the radiation sources must be suited to the various materials used by tobacco product manufacturers. The increasing capacities and increasingly complex structure of multi-segment rods result in higher requirements for quality control. The X-radiation enables obtaining an image of the content of articles made practically of any material.

In the process of manufacturing the rod-like articles both semi-finished and finished products are transferred among the machines in the form of a stream (mass flow). Horizontally, the stream of articles is effected by means of belt or chain conveyors, whereas vertically the mass flow is effected by gravity in both the transferring channels and the stores, whereas in both cases the articles are transferred transversely to the axis of the articles. The mass flow being a multi-layer flow may be converted into a single-layer flow, and in such flow the individual articles may be measured. The purpose of this invention is to find an optimal solution combining the process efficiency and the correctness of quality control. For example for multi-segment filter rods the physical parameters which require identification are the length of segments and the position of segments relative to one another along the axis of the rods as well as the position of the capsules in the segments along the axis of the rods and transversely to the axis of the rods. The purpose of measurement is to detect any defects of the rods, for example the spaces among the segments which should abut. Another defect is a non-central position of the capsule or an improper position of the capsule at the axis. In the case of filter rods made of a single material the physical parameter which should be detected may be for example an undesired material concentration which, in a finished cigarette with a filter tip, may result in a too big resistance to airflow through the filter tip. In the case of cigarettes it may be necessary to identify the existence of undesired inclusions in the cut tobacco.

The application DE102014209721A1 discloses a method of measuring the parameters of rod-like articles using x-rays. The rod-like articles are placed in a rotating clamp having seats arranged to hold the rod-like articles. During measurement the rotating clamp is rotated about its own axis, which enables recording of the signals. A defect of this solution is the fact that the rod-like articles do not rotate around their own axis, but around the axis of the rotating clamp as a whole. The creation of a three-dimensional image of the rod-like articles requires the use of complex processing typical for computed tomography. The presented method may be used in laboratory measurements, in the testing of a selected group of articles. It is not suitable, however, for measurement on an automated production line along which rod-like articles pass in large numbers.

Documents EP0790006B1 and EP2769632A1 disclose methods and devices for the non-invasive measurement of quality parameters of rod-like articles using X-rays, suitable for use on an automated production line. The document EP0790006B1 describes a method and device enabling determination of the density of a rod-like article on the basis of a measurement of the intensity of X-radiation penetrating through the rod-like article at different thicknesses of the rod-like article. The document EP2769632A1 discloses a method for the measurement of a capsule placed inside a rod-like article, using three independent measuring units performing measurements at different angles. A drawback of both of these solutions is that measurement is limited to one article at a time. Additional systems for automated conveying and inspecting rod-like articles are disclosed in WO 2015/063284 and WO 2015/039851.

The object of the invention is an apparatus for identification of physical parameters of rod-like articles of the tobacco industry provided with a first store of rod-like articles; a second store of rod-like articles, and a transferring mechanism arranged to axially transfer of a single-layer group of rod-like articles from the first store of rod-like articles to the second store of rod-like articles. characterised in that in the area between the first store of rod-like articles and the second store of rod-like articles, in a gap between the first store of rod-like articles and the second store of rod-like articles, there is situated a radiation source and there is situated a single-point type radiation sensor for receiving radiation, the radiation sensor being positioned transversely to the direction of transferring, whereas the beam of the radiation from the radiation source reaches the radiation sensor after penetrating through the rod-like articles being transferred, the radiation sensor is arranged to produce a signal representing the attenuation of radiation by the rod-like articles during transferring, the rod-like articles being situated between the radiation source and the radiation sensor. The transverse positioning of the sensor enables including multiple rod-like articles in the scope of measurement, with the scanning speed remaining unchanged.

The apparatus according to the invention may optionally be further characterised in that the apparatus is provided with a rotating unit for simultaneous rotation of the rod-like articles in a group of rod-like articles, situated between the first store and the second store.

The apparatus according to the invention may optionally be further characterised in that the rotating unit is integrated with the transferring mechanism.

The apparatus according to the invention may optionally be further characterised in that the first store of rod-like articles is selected from a group comprising preferably a flat belt conveyor, a belt conveyor provided with multiple longitudinal depressions in the form of grooves, a first multi-channel hopper in which the rod-like articles in multiple channels move in individual vertical columns.

The apparatus according to the invention may optionally be further characterised in that the second store of rod-like articles is selected from a group comprising preferably a flat belt conveyor, a belt conveyor provided with multiple longitudinal depressions in the form of grooves, a belt conveyor provided with multiple transverse depressions in the form of grooves or channels, a second multi-channel hopper wherein the rod-like articles in multiple channels move under the influence of the force of gravity in individual vertical columns.

The apparatus according to the invention may optionally be further characterised in that the depressions in the form of grooves are situated parallel to the direction of transferring.

The apparatus according to the invention may optionally be further characterised in that the depressions in the form of grooves are situated transversely to the direction of transferring.

The apparatus according to the invention may optionally be further characterised in that the source of radiation is a source of electromagnetic radiation of a frequency in the range between 10¹² and 10¹⁹ Hz. The use of electromagnetic radiation in this range enables measuring the parameters of rod-like articles containing materials with a high degree of radiation absorption in other frequency ranges.

The apparatus according to the invention may optionally be further characterised in that the radiation source is arranged so that it produces radiation in the form of a sheet beam. The beam shaping in the form of a sheet beam enables obtaining a strong signal while maintaining efficient radiation intensity, and enables avoiding negative effects of panoramic beam emitting.

The apparatus according to the invention is further characterised in that the source of radiation is arranged so that the intensity of the emitted radiation is adjusted to the travel speed of the rod-like articles.

The apparatus according to the invention may optionally be further characterised in that the radiation sensor is arranged so that the exposure time of the radiation sensor depends on the travel speed of the rod-like articles. The adjustment of the radiation intensity and the exposure time relative to the speed of the multi-path conveyor enables obtaining the maximum measuring speed while maintaining the measuring accuracy; a greater intensity enables shortening the required exposure time, which results in an increased speed of the multi-path conveyor.

The apparatus according to the invention may optionally be further characterised by being further provided with a processing station which is arranged to collect the signal delivered from the radiation sensor and produce on its basis an image representing the attenuation of radiation along the length of at least one rod-like article. The processing station enables obtaining an image of susceptibility generated on the basis of a series of linear or matrix measurements. As a result the physical parameters of the rod-like articles may be shown in the graphical form so that the entire group of rod-like articles can be seen in a single image in all analysed paths at full length of the rod-like articles.

The apparatus according to the invention may optionally be further characterised in that a feeding transporter for feeding of the rod-like articles in the form of a mass flow and a transporter receiving the rod-like articles in the form of a mass flow are attached to the apparatus. The feeding transporter and the receiving transporter enable integrating the apparatus into existing systems using the mass flow.

An advantage of the apparatus as in the invention is a high certainty of correctness of the results for various materials.

The object of the invention was shown in detail in a preferred embodiment in a drawing in which:
- Fig. 1: shows a transport fragment of a production line comprising two conveyors;
- Fig. 2: shows a transport fragment of a production line comprising two conveyors;
- Fig. 3: shows a rotating unit;
- Fig. 4: shows a transport fragment of a production line comprising two conveyors with grooves,
- Fig. 5: shows a transport fragment of a production line comprising two conveyors with grooves and two mass flow transporters;
- Fig. 6: shows a transport fragment of a production line comprising a hopper and a transporter;
- Figs. 7 and 8: show a transport fragment of a production line comprising two hoppers;
- Fig. 9: shows a transport fragment of a production line comprising a hopper and a conveyor;
- Fig. 10: shows an example of a rod-like article in the form of a multi-segment rod;
- Fig. 11: shows a two-dimensional image of the rod-like article of Fig. 10 generated after the rod has been x-rayed;
- Fig. 12: shows a processed image of the rod-like article of Fig. 10 subjected to analysis;

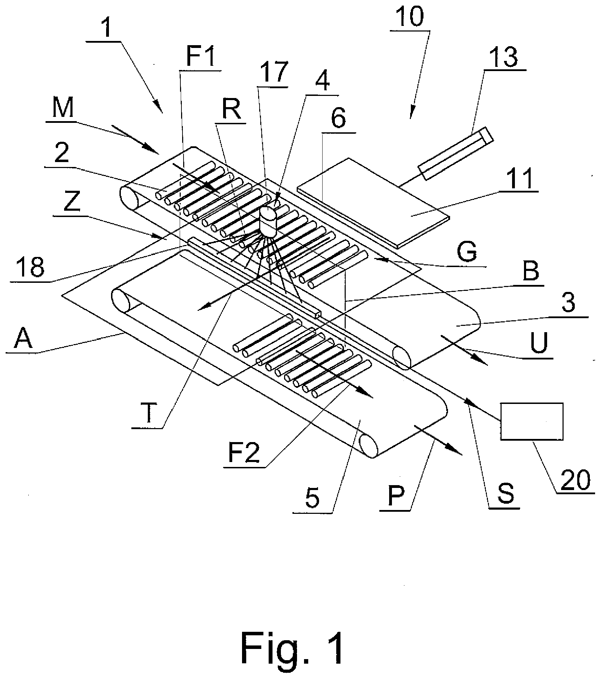

The fragment of a production line shown in Fig. 1 is an apparatus 1 for identification of physical parameters of rod-like articles 2. This fragment comprises a first conveyor 3, a measuring unit 4, a second conveyor 5, and a transferring mechanism 10. The production line may comprise a not shown feeding unit designed to feed the rod-like articles 2 onto the first conveyor 3 (direction M), a not shown receiving unit designed to receive the rod-like articles 2 from the first conveyor 3 (direction U), and a receiving unit designed to receive the rod-like articles 2 from the second conveyor 5 (direction P). The feeding and receiving units may be any devices known in the tobacco industry designed to convey the rod-like articles 2. The first conveyor 3 is arranged to transfer a first single-layer stream F1 of rod-like articles 2, whereas the second conveyor 5 is arranged to transfer a second single-layer stream F2 of rod-like articles 2. The apparatus 1 for identification of physical parameters of rod-like articles 2 comprises the first conveyor 3, the second conveyor 5, the measuring unit 4, and the transferring mechanism 10. A pushing element 11 of the transferring mechanism 10 may be embodied as a flat element with a linear pushing edge 6. The drive element 13 may be any element performing a linear motion, for example a pneumatic actuator. The transferring mechanism 10 is arranged to transfer a group G of rod-like articles 2 from the first conveyor 3 to the second conveyor 5, the transferring of the group G takes place in a transferring plane A in the direction T. The measuring unit 4 comprising a radiation source 17 and a radiation sensor 18 is situated between the first conveyor 3 of the first single-layer stream F1 and the second conveyor 5 of the single-layer second stream F2. The radiation source 17 is situated above the transferring plane A, whereas the radiation sensor 18 is situated beneath the transferring plane A. An opposite configuration where the radiation source 17 is situated beneath the transferring plane A and the radiation sensor 18 above it is also possible. The radiation source 17 emits radiation R which penetrates through the area between the first conveyor 3 and the second conveyor 5 in the plane B situated in principle perpendicular to the transferring plane A and reaches the radiation sensor 18. The radiation sensor 18 may have the form of a strip or a matrix, whereas the matrix may consist of a plurality of individual sensors. The radiation sensor 18 may be arranged to receive the electromagnetic radiation of a frequency in the range between 10¹² and 10¹⁹ Hz. In the embodiment the radiation sensor 18 was shown as a strip arranged to receive the radiation R. The radiation source 17 and the radiation sensor 18 determine the plane B. In the top view the plane B and the radiation sensor 18 are situated perpendicular to the direction of transferring T of the rod-like articles 2, i.e. perpendicular to the transferring plane A. The radiation source 17 may be arranged to generate a flat beam referred to as sheet beam, whereas such beam is directed at the radiation sensor 18. It is possible to use such radiation source 17 which will have the radiation intensity or the exposure time adjustable to the transferring speed of the rod-like articles. During the measurement of physical parameters of rod-like articles 2 the first conveyor 3 and the second conveyor 5 are stopped.

During the production the rod-like articles 2 may flow along the first conveyor 3, i.e. the flow takes place in the direction of the streams M - U. If it is necessary to perform the measurement of physical parameters of selected samples, the first single-layer stream F1 is stopped by stopping the conveyor 3. The transferring mechanism 10 is activated and the group G of rod-like articles 2 is transferred from the conveyor 3 onto the stopped conveyor 5, penetrating through the area of operation of the measuring unit 4. After the measurement has been performed, the rod-like articles 2 may be transferred along the second conveyor 5 in the form of the second single-layer stream F2 to a container or a hopper from where, if they meet the quality requirements, they may be directed to the production process. The apparatus may also operate in such a way that all rod-like articles 2 are measured, and then the flow takes place in the direction of the streams M - T - P.

The radiation R emitted by the radiation source 17 penetrates through the rod-like articles 2 being transferred. The radiation R is partially absorbed by the material of the rod-like articles 2 when it penetrates through the rod-like articles 2. The radiation R emitted by the radiation source 17 penetrates to a different extent through different materials used in the rod-like articles 2 due to different electromagnetic radiation hardness of such materials. During the transferring the radiation sensor 18 receives the radiation R for successive positions of the articles 2, i.e. the representations of successive cross-sections of the rod-like article 2 are created in the form of successive lines which represent the attenuation of radiation in successive cross-sections of the rod-like articles 2. In other words, the radiation sensor 18 receives information about the properties of the material in successive cross-sections of the rod-like articles 2. The signals S which come from the radiation sensor 18 and contain information about successive cross-sections are sent to the processing station 20 for the cross-sections along the length of the rod-like articles 2. The signals S may be converted to a single line of created image. The processing station 20, having received successive signals S, makes a compilation of such signals in order to obtain a two-dimensional image of the rod-like articles 2 in the group G. The processing station 20 may prepare an image of the entire group, i.e. all articles in the group G, or separate images of individual articles of the group G, whereas it is possible for the radiation sensor 18 in the form of both a strip and a matrix. A two-dimensional image of the rod-like articles may be obtained on the basis of the movement parameters, in particular the shift of the pushing element 11, for example the speed or the size of travel of the pushing element 11.

It is possible to rotate the rod-like articles 2 during the measurement and to record multiple signals S from the radiation sensor 18 for successive angular positions of the articles. The recorded two-dimensional images may be converted to a three-dimensional image of contents of the article based on which the position of elements placed in the rod-like articles 2, for example capsules with aromatic substances and various inserts made of metal or plastic, may be precisely determined.

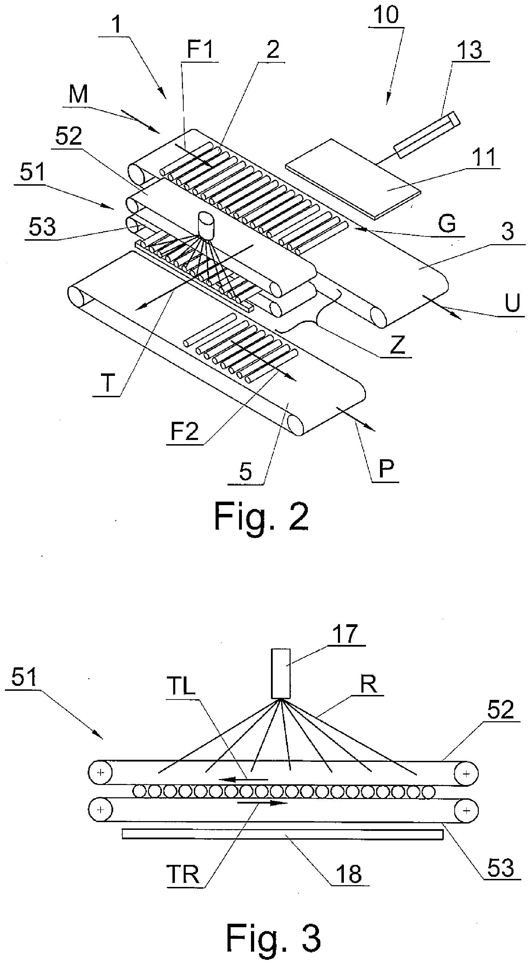

Fig. 2 shows a fragment of a production line in which in the area Z between the first conveyor 3 and the second conveyor 5 there is situated the rotating unit 51 for simultaneous rotation of the articles 2 in the group G. The measurement may be performed after stopping the group G or while transferring the group G.

Fig. 3 shows an example of the rotating unit 51 in the form of two belts 52 and 53 which at the time of rotation of the rod-like articles 2 are moved so that the belt sections being in contact with the rod-like articles 2 move in opposite directions TL and TR. The rotating unit 51 may be arranged to rotate the rod-like articles 2 after they have been pushed out by the pushing unit 10 or when the articles 2 are being pushed out by the pushing unit 10.

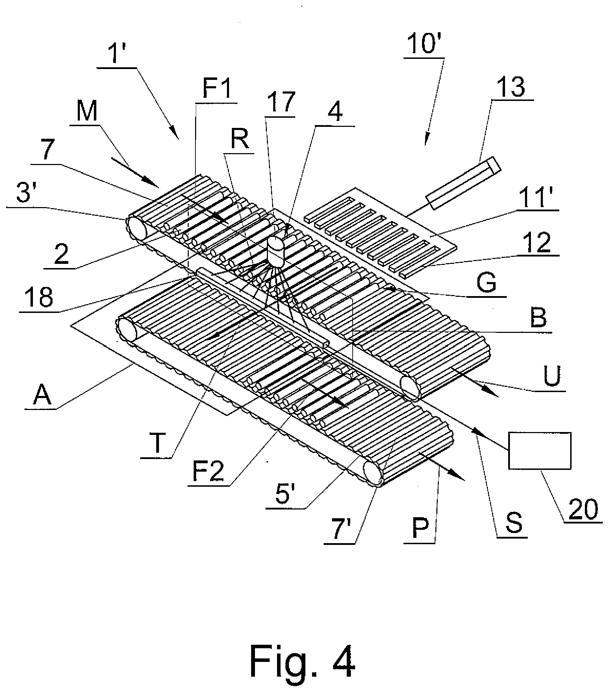

The fragment of the production line shown in Fig. 4 is provided with the apparatus 1 for identification of physical parameters of rod-like articles 2. The apparatus 1' comprises a first conveyor 3', a measuring unit 4, a second conveyor 5', and a transferring mechanism 10'. The production line may comprise a not shown feeding unit designed to feed the rod-like articles onto the first conveyor (direction M), a not shown receiving unit designed to receive the rod-like articles 2 from the first conveyor 3' (direction U) and a not shown receiving unit designed to receive the rod-like articles 2 from the second conveyor 5' (direction P). The first conveyor 3' is arranged to transfer the first single-layer stream F1 of rod-like articles 2. The first conveyor 3' has the form of a grooved belt, whereas the grooves 7 are positioned transversely to the direction of transferring of the rod-like articles 2. The second conveyor 5' is arranged to transfer the second single-layer stream F2 of rod-like articles. The second conveyor 5' also has the form of a grooved belt, the grooves 7' are also positioned transversely to the direction of transferring of the rod-like articles 2. The apparatus 1' for identification of physical parameters of rod-like articles 2 in the second embodiment comprises the first conveyor 3', the second conveyor 5', the measuring unit 4', and the transferring mechanism 10'. Similar to the first embodiment the measuring unit 4 comprising they radiation source 17 and the radiation sensor 18 is situated in the plane B between the first conveyor 3' of the first single-layer stream F1 and the second conveyor 5' of the second single-layer stream F2. The transferring mechanism 10' transfers the group G of rod-like articles from the first conveyor 3' to the second conveyor 5', the transferring of the group G takes place in the transferring plane A. the pushing element 11' of the transferring mechanism 10' may have the form of a flat element provided with multiple rod-shaped pushers 12. Similar to the preceding embodiment the radiation source 17 may be situated both above and beneath the transferring plane A, and the radiation sensor 18 on the opposite side of the transferring plane A. The image of the rod-like articles 2 in the group G is created using a similar method as in the first embodiment.

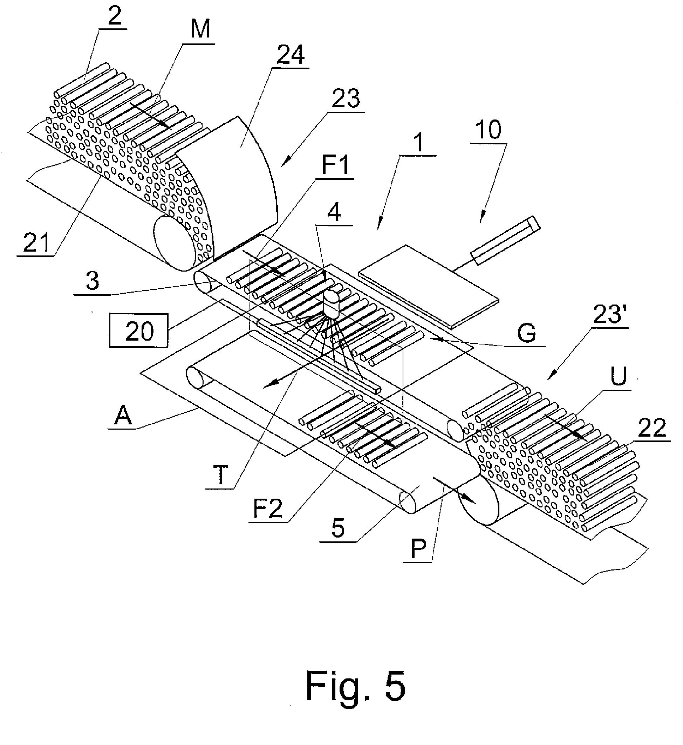

Fig. 5 shows an apparatus 1 for identification of physical parameters of rod-like articles 2 in a production line which comprises a first transporter 21 of the mass flow of rod-like articles 2, the apparatus 1 for identification of physical parameters of rod-like articles 2 of the tobacco industry and a second transporter 22 of the mass flow of rod-like articles 2. The apparatus 1 for identification of physical parameters of rod-like articles 2, as described above, comprises the first conveyor 3 arranged to transfer the first single-layer stream F1 of rod-like articles, the second conveyor 5 arranged to transfer the second single-layer stream F2 of rod-like articles 2, and the measuring unit 4 comprising the radiation source and the radiation sensor. On the first transporter 21 of the mass flow, the rod-like articles 2 move in the direction M, whereas the flow on the first transporter 21 is a multi-layer flow. On the second transporter 22 of the mass flow, the rod-like articles 2 move in the direction U, whereas the flow on the second transporter 22 is a multi-layer flow. Between the first transporter 21 and the first conveyor 3 of the first single-layer stream F1 there is situated a unit 23 for conversion of the mass flow to the single-layer flow. The unit 23 may contain a guiding element 25 whose task is to narrow the flow of rod-like articles 2. Between the first conveyor 3 of the single-layer stream and the second transporter 22 of the mass flow there is situated a unit 23' for conversion of the single-layer flow to the mass flow, whereas such unit may be additionally provided with guiding elements. The rod-like articles 2 are transferred along the first transporter 21 in the form of the mass flow in the direction M, and then they pass through the unit 23 for conversion of the mass flow to the single-layer flow and are further transferred in the form of the first single-layer stream F1. Then they pass through the unit 23' for conversion of the single-layer stream to the mass flow and are further transferred in the form of the mass flow in the direction U. In order to perform the measurement of physical parameters of rod-like articles 2 the conveyor 3 is stopped, and the transferring mechanism 10 transfers, in the direction T, the group G of rod-like articles 2 which pass through the area of operation of the measuring unit 4 and are placed on the second conveyor 5 of the second single-layer stream F2. At the time of stoppage of the first conveyor 3 of the single-layer stream the momentary overflow of the rod-like articles 2 may be stored in a not shown variable capacity hopper of the unit 23.

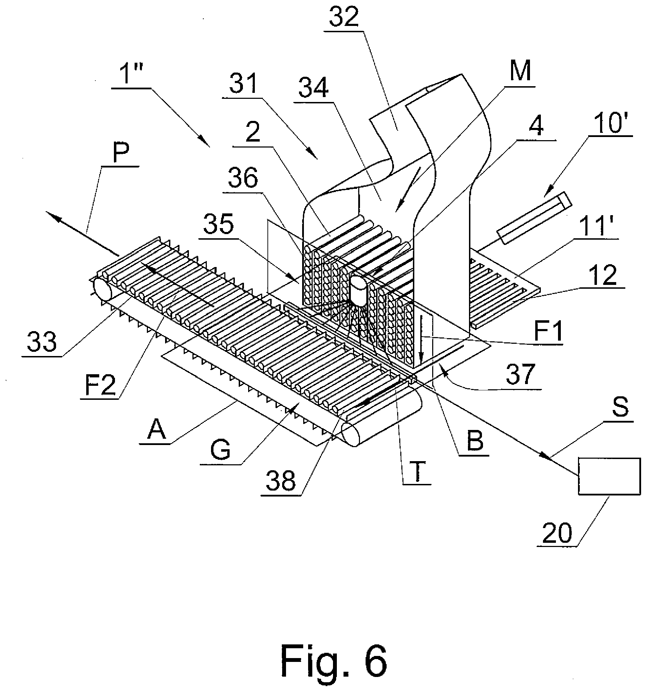

Fig. 6 shows an apparatus 1" for identification of physical parameters of rod-like articles 2 comprising a first hopper 31 of rod-like articles 2, a channel 32 of the mass flow of rod-like articles 2, a conveyor 33 of rod-like articles 2 and a measuring unit 4. The first hopper 31 is fed through the channel 32 (shown in the drawing as not filled with the articles), the upper part of the hopper being a chamber 34, and the bottom part 35 of the hopper 31 having the form of multiple channels 36 whose width is slightly greater than the diameter of the rod-like articles 2. The channels 36 are closed from the bottom by a wall 37 on which the rod-like articles 2 are situated. Behind the first hopper 31, at the level of the rod-like articles 2 situated at the ends of the channels 36, there is situated a pushing mechanism 10' which makes a reciprocating motion and pushes the group G of rod like articles 2 out of the channels 36, whereas the group G comprises respectively one rod-like article 2 situated at the end of each channel 36. A pushing element 11' of the pushing mechanism 10' may have the form of multiple rod-shaped pushers 12 in a number corresponding to the number of the articles 2 in the group G. The conveyor 33 is provided with partitions 38 formed transversely to the lengthwise direction of the conveyor 33 and at the same time transversely to the direction of transferring on this conveyor. Between the neighbouring partitions there is situated one rod-like article 2. The mass flow in the direction M supplied through the channel 32 is converted in the first hopper 31 to multiple single-layer streams in the channels 36. The group G formed of the articles of individual single-layer streams is transferred onto the stopped conveyor 33 of the second single-layer stream F2. In this embodiment, all rod-like articles pass through the area of operation of the measuring unit 4. The image of the rod-like articles 2 in the group G is created using a similar method as in the preceding embodiments. The rod-like articles from the conveyor 33 are transferred onto the transporter of the mass flow in the direction P or onto another conveyor of the single-layer stream.

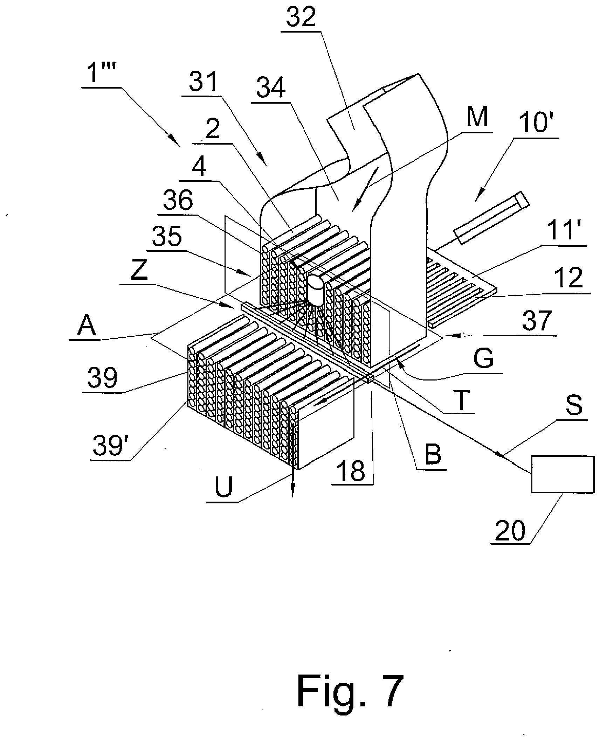

Fig. 7 shows an apparatus 1'" for identification of physical parameters of rod-like articles 2 comprising the first hopper 31 of rod-like articles 2 as in Fig. 6, the channel 32 of the mass flow of rod-like articles, the second hopper 39 of rod-like articles 2 and the measuring unit 4. The apparatus 1'" for identification of physical parameters of rod-like articles 2 comprises multiple channels 36 arranged to transfer multiple single-layer streams F1 of rod-like articles, the second hopper 39 having the channels 39' arranged to transfer multiple single-layer streams of rod-like articles 2 and the measuring unit 4 comprising the radiation source 17 and the radiation sensor 18. The group G of rod-like articles 2 is created as in the preceding embodiment, and the image of the articles of the group G is created as in the preceding embodiment. After transferring the group G and creating the image, the rod-like articles 2 are placed in the second hopper 39 in which they will move by gravity in the form of multiple single-layer streams forming the mass flow U. Further the rod-like articles 2 may be received by the transporter of the mass flow.

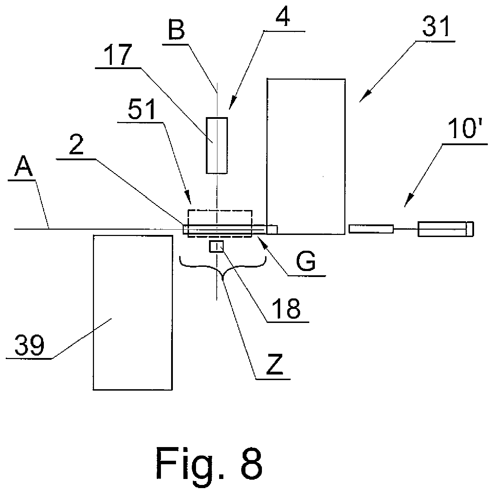

Fig. 8 shows a fragment of the production line of Fig. 7 in a side view, whereas the distances among the elements were magnified in relation to the embodiment shown in Fig. 7. In the area Z, i.e. between the second hopper 39 and the first hopper 31, there is situated a rotating unit 51 arranged to simultaneous rotation of the rod-like articles 2 pushed out of the first hopper 31 in the form of the group G, whereas the rotating unit 51 was previously discussed and shown in Fig. 3. The rotating unit 51 may be arranged to rotate the rod-like articles 2 after they have been pushed out by the transferring mechanism 10' or when the articles 2 are being pushed out by the transferring mechanism 10', whereas the rod-shaped pushers 12 of the pushing unit 10' may have the possibility of rotation around the axis of rotation of the rod-like articles 2. The rotating unit 51 may be integrated or mechanically coupled with the transferring mechanism 10'. The possibility of rotation of the rod-shaped pushers 12 reduces the friction between the rod-like articles 2 and the rod-shaped pushers 12 during the rotation of the rod-like articles 2 by the rotating unit 21.

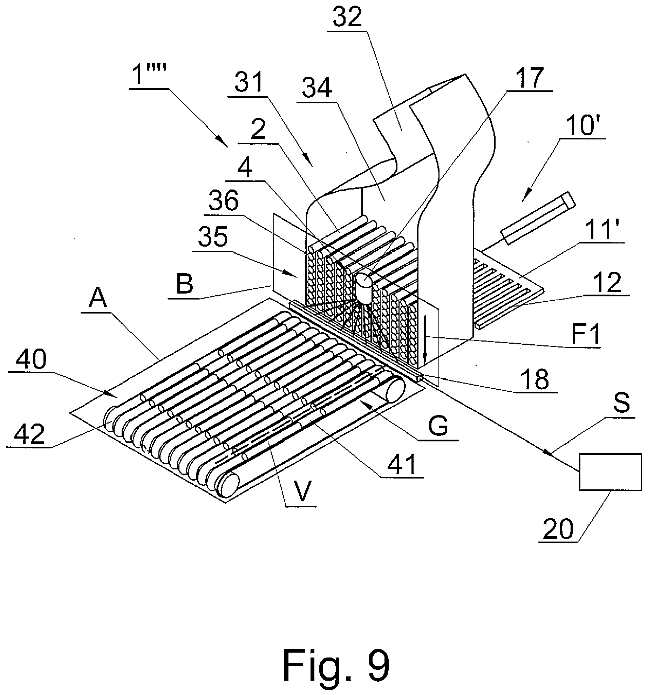

Fig. 9 shows an apparatus 1"" for identification of physical parameters of rod-like articles 2 comprising the first hopper 31 of rod-like articles 2 as shown in Fig. 7, the channel 32 of the mass flow of rod-like articles, the conveyor 40 of the single-layer stream of rod-like articles 2 and the measuring unit 4. The apparatus 1"" for identification of physical parameters of rod-like articles 2 comprises multiple channels 36 arranged to transfer multiple first single-layer streams F1 of rod-like articles 2, the rod-shaped pusher 12 of the single-layer stream of rod-like articles 2, and the measuring unit 4 comprising the radiation source 17 and the radiation sensor 18. The group G of rod-like articles and the image of the articles in the group G are created as in the preceding embodiment of the invention. The conveyor 40 is designed as a belt conveyor which comprises a multi-groove belt 42. The distances between the grooves 41 are arranged to the distances between the channels 8. For example, the grooves 41 may have the shape of the letter V or the shape of the letter U. The conveyor 40 may also be designed as a chain conveyor. The rod-like articles 2 are transferred on the multi-groove belt 42 on which the rod-like articles 2 are situated along the grooves 41 of the multi-groove belt 42. Further the rod-like articles 2 may be received by the transporter of the mass flow.

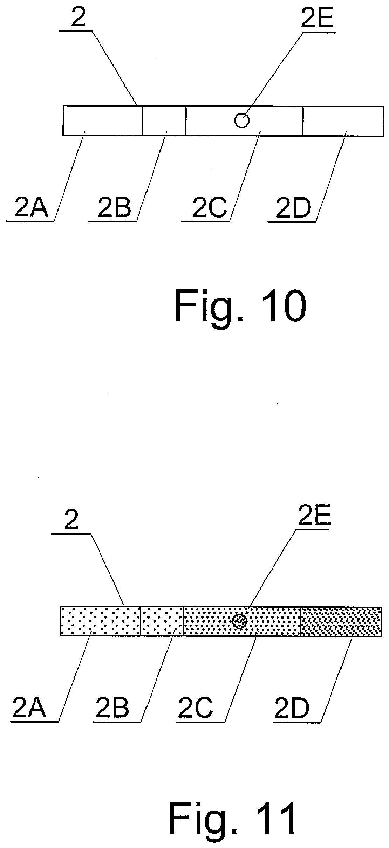

Fig. 10 shows an example of the rod-like article 2 in the form of a multi-segment filter rod belonging to the group G. The multi-segment filter rod contains components in the form of four segments 2A, 2B, 2C and 2D, whereas a capsule 2E is positioned in the segment 2C (the rod was shown as transparent without any casing material). Fig. 11 shows a two-dimensional image of a rod-like article in the form of the multi-segment filter rod of Fig. 10 generated after the multi-segment filter rod has been x-rayed, whereas the image may be generated on the basis of a measurement made with the aid of the method described above using the radiation sensor in the form of a strip as well as a two-dimensional matrix.

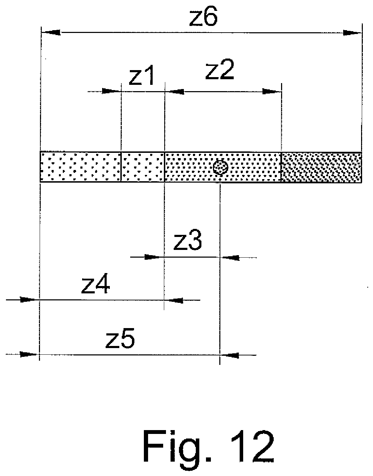

The image shown in Fig. 11 may be subject to further processing. During the analysis, for example the segment lengths z1, z2, z4, the full rod length z6 or the capsule position defined by the dimension z3 or z5 (Fig. 12) may be checked.

The term 'fist store' may comprise, but is not limited to, such elements as 'first conveyor' or 'first hopper'.

The term 'second store' may comprise, but is not limited to, such elements as 'second conveyor' or 'second hopper'.

## Claims

1. Apparatus (1, 1', 1", 1"', 1"") for identification of physical parameters of rod-like articles of the tobacco industry provided with
a first store (3, 3', 31) of rod-like articles (2);
a second store (5, 5', 33, 39, 40) of rod-like articles (2), and
a transferring mechanism (10) arranged to axially transfer a single-layer group (G) of rod-like articles (2) from the first store (3, 3', 31) of rod-like articles (2) to the second store (5, 5', 33, 39, 40) of rod-like articles (2);
**characterised in that**
in the area between the first store (3, 3', 31) of rod-like articles (2) and the second store (5, 5', 33, 39, 40) of rod-like articles (2) in a gap between the first store (3, 3', 31) of rod-like articles (2) and the second store (5, 5', 33, 39, 40) of rod-like articles (2) there is situated a single point type radiation source (17) and there is situated a radiation sensor (18) for receiving radiation (R), the radiation sensor being positioned transversely to the direction of transferring,
whereas the beam of the radiation (R) from the radiation source (17) reaches the radiation sensor (18) after penetrating through the single-layer group (G) of rod-like articles (2) being transferred,
the radiation sensor (18) is arranged to generate a signal representing the attenuation of radiation by the rod-like articles (2) during transferring, the rod-like articles being situated between the radiation source (17) and the radiation sensor (18).

2. Apparatus (1, 1', 1", 1"', 1"") as in claim 1 **characterised in that** the apparatus (1, 1', 1", 1'", 1"") is provided with a rotating unit (51) for simultaneous rotation of the rod-like articles (2) in a group (G) of rod-like articles (2), situated between the first store (3, 3', 31) and the second store (5, 5', 33, 39, 40).

3. Apparatus (1, 1', 1", 1'", 1"") as in claim 2 **characterised in that** the rotating unit (51) is integrated with the transferring mechanism (10, 10').

4. Apparatus (1, 1', 1", 1'", 1"") as in claim 1 or 2 **characterised in that** the first store (3, 3', 31) of rod-like articles is selected from a group comprising preferably
a flat belt conveyor (3),
a belt conveyor provided with multiple transverse depressions in the form of grooves (3'),
a first multi-channel hopper (31) in which the rod-like articles (2) in multiple channels (36) move under the influence of the force of gravity in individual vertical columns.

5. Apparatus (1, 1', 1", 1"', 1"") as in claim 1 **characterised in that** the second store (5, 5', 39, 33, 40) of rod-like articles is selected from a group comprising preferably
a flat belt conveyor (5),
a belt conveyor provided with multiple longitudinal depressions in the form of grooves (40),
a belt conveyor provided with multiple transverse depressions in the form of grooves (5') or channels (33),
a second multi-channel hopper (39) in which the rod-like articles (2) in multiple channels (36) move under the influence of the force of gravity in individual vertical columns.

6. Apparatus (1, 1', 1", 1'", 1"") as in claim 2 or 3 **characterised in that** the depressions in the form of grooves (41) are situated parallel to the direction of transferring.

7. Apparatus (1, 1', 1", 1'", 1"") as in claim 2 or 3 **characterised in that** the depressions in the form of grooves (7') are situated transversely to the direction of transferring.

8. Apparatus (1, 1', 1", 1"', 1"") as in any of the preceding claims 1 to 7 **characterised in that** the source of radiation (17) is a source of electromagnetic radiation of a frequency in the range between 10¹² and 10¹⁹ Hz.

9. Apparatus (1, 1', 1", 1'", 1"") as in any of the preceding claims 1 to 8 **characterised in that** the radiation source (17) is arranged so that the intensity of the emitted radiation (R) is adjusted to the travel speed of the rod-like articles (2).

10. Apparatus (1, 1', 1", 1'", 1"") as in any of the preceding claims 1 to 9 **characterised in that** the radiation sensor (18) is arranged so that the exposure time of the radiation sensor (18) depends on the travel speed of the rod-like articles (2).

11. Apparatus (1, 1', 1", 1'", 1"") as in any of the preceding claims 1 to 10 **characterised by** being further provided with a processing station (20) which is adapted to collect the signal (S) delivered from the radiation sensor (18) and produce on its basis an image (S) representing the attenuation of radiation (R) along the length of at least one rod-like article (2).

12. Apparatus (1, 1', 1", 1"', 1"") as in any of the preceding claims 1 to 11 **characterised in that** a first feeding transporter (21) for the feeding of the rod-like articles (2) in the form of a mass flow and a second transporter (22) receiving the rod-like articles (2) in the form of a mass flow are attached to the apparatus (1).

## Patentansprüche

1. Die Vorrichtung (1, 1', 1", 1"', 1"") zur Identifizierung physikalischer Parameter von stabförmigen Gegenständen für
die Tabakindustrie mit einem ersten Vorrat (3, 3', 31) an stabförmigen Gegenständen (2);
einem zweiten Vorrat (5, 5', 33, 39, 40) an stabförmigen Gegenständen (2) und
einen Übertragungsmechanismus (10), der angeordnet ist, um eine einschichtige Gruppe (G) von stabförmigen Gegenständen (2) axial vom ersten Vorrat (3, 3', 31) an stabförmigen Gegenständen (2) nach zu übertragen der zweite Vorrat (5, 5', 33, 39, 40) an stabförmigen Gegenständen (2);
ist **dadurch gekennzeichnet,**
**dass** im Bereich zwischen dem ersten Vorrat (3, 3', 31) von stabförmigen Gegenständen (2) und dem zweiten Vorrat (5, 5', 33, 39, 40) von stabförmigen Gegenständen (2) in einem Spalt zwischen dem ersten Vorrat (3, 3', 31) von stabförmigen Gegenständen (2) und dem zweiten Vorrat (5, 5', 33, 39, 40) von stabförmigen Gegenständen (2) sich eine Einzelpunktstrahlungsquelle (17) befindet und dort befindet sich ein Strahlungssensor (18) zum Empfangen von Strahlung (R), wobei der Strahlungssensor quer zur Übertragungsrichtung positioniert ist,
wohingegen der Strahl der Strahlung (R) von der Strahlungsquelle (17) den Strahlungssensor (18) erreicht, nachdem er die einschichtige Gruppe (G) der übertragenen stabförmigen Gegenstände (2) durchdrungen hat,
der Strahlungssensor (18) ist so angeordnet, dass er ein Signal erzeugt, das die Abschwächung der Strahlung durch die stabförmigen Gegenstände (2) während der Übertragung darstellt, wobei sich die stabförmigen Gegenstände zwischen der Strahlungsquelle (17) und dem Strahlungssensor (18) befinden.

2. Die Vorrichtung (1, 1', 1", 1"', 1"") nach Anspruch 1 ist **dadurch gekennzeichnet, dass** die Vorrichtung (1, 1', 1", 1"', 1"") mit einer rotierenden Einheit (51) zum gleichzeitigen Drehen der stabförmigen Gegenstände (2) in einer Gruppe (G) von stabförmigen Gegenständen (2) versehen ist, die sich zwischen dem ersten Vorrat (3, 3', 31) und befindet der zweite Vorrat (5, 5', 33, 39, 40).

3. Die Vorrichtung (1, 1', 1", 1"', 1"") nach Anspruch 2, ist **dadurch gekennzeichnet, dass** die rotierende Einheit (51) in den Übertragungsmechanismus (10, 10') integriert ist.

4. Die Vorrichtung (1, 1', 1", 1"', 1"") nach Anspruch 1 oder 2, ist **dadurch gekennzeichnet, dass** der erste Vorrat (3, 3', 31) von stabförmigen Gegenständen aus einer Gruppe ausgewählt ist, umfassend vorzugsweise
einen Flachbandförderer (3),
einen Bandförderer, der mit mehreren Quervertiefungen in Form von Nuten (3') versehen ist, einen ersten Mehrkanalbehälter (31), in dem sich die stabförmigen Gegenstände (2) in mehreren Kanälen (36) unter dem Einfluss der Kraft bewegen der Schwerkraft in einzelnen vertikalen Säulen.

5. Die Vorrichtung (1, 1', 1", 1"', 1"") nach Anspruch 1 ist **dadurch gekennzeichnet, dass** der zweite Vorrat (5, 5', 33, 39, 40) von stabförmigen Gegenständen aus einer Gruppe ausgewählt ist, umfassend vorzugsweise
einen Flachbandförderer (5),
einen Bandförderer, der mit mehreren Längsvertiefungen in Form von Nuten (40) versehen ist,
einen Bandförderer, der mit mehreren Quervertiefungen in Form von Nuten (5') oder Kanälen (33) versehen ist,
einen zweiten Mehrkanalbehälter (39), in dem sich die stabförmigen Gegenstände (2) in mehreren Kanälen (36) darunter bewegen der Einfluss der Schwerkraft in einzelnen vertikalen Säulen.

6. Die Vorrichtung (1, 1', 1", 1"', 1"") nach Anspruch 2 oder 3 ist **dadurch gekennzeichnet, dass** die Vertiefungen in Form von Rillen (41) parallel zur Übertragungsrichtung angeordnet sind.

7. Die Vorrichtung (1, 1', 1", 1"', 1"") nach Anspruch 2 oder 3 ist **dadurch gekennzeichnet, dass** die Vertiefungen in Form von Rillen (7') quer zur Übertragungsrichtung angeordnet sind.

8. Die Vorrichtung (1, 1', 1", 1"', 1"") wie in einem der vorhergehenden Ansprüche 1 bis 7 ist **dadurch gekennzeichnet, dass** die Strahlungsquelle (17) eine Quelle elektromagnetischer Strahlung mit einer Frequenz im Bereich zwischen 1012 und 1019 Hz ist.

9. Die Vorrichtung (1, 1', 1", 1"', 1"") wie in einem der vorhergehenden Ansprüche 1 bis 8 ist **dadurch gekennzeichnet, dass** die Strahlungsquelle (17) so angeordnet ist, dass die Intensität der emittierten Strahlung (R) auf die Fahrgeschwindigkeit der stabförmigen Gegenstände (2) eingestellt wird.

10. Die Vorrichtung (1, 1', 1", 1"', 1"") wie in einem der vorhergehenden Ansprüche 1 bis 9 ist **dadurch gekennzeichnet, dass** die der Strahlungssensor (18) so angeordnet ist, dass die Belichtungszeit des Strahlungssensors (18) hängt von der Fahrgeschwindigkeit der stabförmigen Gegenstände (2) ab.

11. Die Vorrichtung (1, 1', 1", 1"', 1"") wie in einem der vorhergehenden Ansprüche 1 bis 10 ist **gekennzeichnet dadurch, dass** sie ferner mit einer Verarbeitungsstation (20) versehen ist, die dazu ausgelegt ist, das vom Strahlungssensor (18) gelieferte Signal (S) zu sammeln und auf seiner Basis ein Bild (S) zu erzeugen, das die Abschwächung der Strahlung (R) entlang der Länge darstellt von mindestens einem stabförmigen Gegenstand (2).

12. Die Vorrichtung (1, 1', 1", 1"', 1"") wie in einem der vorhergehenden Ansprüche 1 bis 11 ist **dadurch gekennzeichnet, dass** einen ersten Zuführtransporter (21) zum Zuführen der stabförmigen Gegenstände (2) in Form eines Massenstroms und einen zweiten Transporter (22), der die stabförmigen Gegenstände (2) in Form eines Massenstroms aufnimmt, sind an der Vorrichtung (1) angebracht.

## Revendications

1. Appareil (1, 1', 1", 1"', 1"") pour l'identification des paramètres physiques des articles en forme de tige de l'industrie du tabac doté
d'un premier magasin (3, 3', 31) d'articles en forme de tige (2) ;
un deuxième magasin (5, 5', 33, 39, 40) d'articles en forme de tige (2), et
un mécanisme de transfert (10) agencé pour transférer axialement un groupe d'une seule couche (G) d'articles en forme de tige (2) du premier magasin (3, 3', 31) d'articles en forme de tige (2) au deuxième magasin (5, 5', 33, 39, 40) d'articles en forme de tige (2) ;
**caractérisé en ce que**
dans la zone située entre le premier magasin (3, 3', 31) d'articles en forme de tige (2) et le deuxième magasin (5, 5', 33, 39, 40) d'articles en forme de tige (2) dans un espace entre le premier magasin (3, 3', 31) d'articles en forme de tige (2) et le deuxième magasin (5, 5', 33, 39, 40) d'articles en forme de tige (2), il y a une source de rayonnement de type ponctuel (17) et un capteur de rayonnement (18) pour la réception du rayonnement (R), le capteur de rayonnement étant positionné transversalement à la direction de transfert,
tandis que le faisceau de rayonnement (R) provenant de la source de rayonnement (17) atteint le capteur de rayonnement (18) après avoir pénétré à travers le groupe d'une seule couche (G) d'articles en forme de tige (2) en cours de transfert,
le capteur de rayonnement (18) est agencé pour générer un signal représentant l'atténuation du rayonnement par les articles en forme de tige (2) pendant le transfert, les articles en forme de tige étant situés entre la source de rayonnement (17) et le capteur de rayonnement (18).

2. Appareil (1, 1', 1", 1"', 1"") selon la revendication 1, **caractérisé en ce que** l'appareil (1, 1', 1", 1"', 1"") est pourvu d'une unité rotative (51) pour la rotation simultanée des articles en forme de tige (2) dans un groupe (G) d'articles en forme de tige (2), situé entre le premier magasin (3, 3', 31) et le deuxième magasin (5, 5', 33, 39, 40).

3. Appareil (1, 1', 1", 1"', 1"") selon la revendication 2, **caractérisé en ce que** l'unité rotative (51) est intégrée au mécanisme de transfert (10, 10').

4. Appareil (1, 1', 1", 1"', 1"") selon la revendication 1 ou 2, **caractérisé en ce que** le premier magasin (3, 3', 31) d'articles en forme de tige est sélectionné à partir d'un groupe comprenant de préférence
un convoyeur à bande plate (3),
un convoyeur à bande muni de multiples dépressions transversales en forme de rainures (3'), une première trémie à canaux multiples (31) dans laquelle les articles en forme de tige (2) à canaux multiples (36) se déplacent sous l'influence de la force de gravité dans des colonnes verticales individuelles.

5. Appareil (1, 1', 1", 1"', 1"") selon la revendication 1, **caractérisé en ce que** le deuxième magasin (5, 5', 33, 39, 40) d'articles en forme de tige est choisi dans un groupe comprenant de préférence
un convoyeur à bande plate (5),
un convoyeur à bande muni de multiples creux transversaux en forme de rainures (40),
un convoyeur à bande muni de multiples creux transversaux sous forme de rainures (5') ou de canaux (33),
une deuxième trémie à canaux multiples (39) dans laquelle les articles en forme de tige (2) à canaux multiples (36) se déplacent sous l'influence de la force de gravité dans des colonnes verticales individuelles.

6. Appareil (1, 1', 1", 1"', 1"") selon la revendication 2 ou 3, **caractérisé en ce que** les enfoncements en forme de rainures (41) sont situés parallèlement à la direction de transfert.

7. Appareil (1, 1', 1", 1"', 1"") selon la revendication 2 ou 3, **caractérisé en ce que** les creux en forme de rainures (7') sont situés transversalement à la direction de transfert.

8. Appareil (1, 1', 1", 1"', 1"") comme dans l'une quelconque des revendications précédentes 1 à 7, **caractérisé en ce que** la source de rayonnement (17) est une source de rayonnement électromagnétique d'une fréquence comprise entre 1012 et 1019 Hz.

9. Appareil (1, 1', 1", 1"', 1"") comme dans l'une des revendications précédentes 1 à 8, **caractérisé en ce que** la source de rayonnement (17) est disposée de manière à ce que l'intensité du rayonnement émis (R) soit adaptée à la vitesse de déplacement des articles en forme de tige (2).

10. Appareil (1, 1', 1", 1"', 1"") comme dans l'une des revendications précédentes 1 à 9, **caractérisé en ce que** le capteur de rayonnement (18) est disposé de telle sorte que la durée d'exposition du capteur de rayonnement (18) dépende de la vitesse de déplacement des articles en forme de tige (2).

11. Appareil (1, 1', 1", 1"', 1"") comme dans l'une quelconque des revendications précédentes 1 à 10, **caractérisé en ce qu'**il est en outre pourvu d'une station de traitement (20) qui est adaptée pour collecter le signal (S) délivré par le capteur de rayonnement (18) et produire sur sa base une image (S) représentant l'atténuation du rayonnement (R) sur la longueur d'au moins un article en forme de tige (2).

12. Appareil (1, 1', 1", 1"', 1"") comme dans l'une quelconque des revendications précédentes 1 à 11, **caractérisé en ce qu'**un premier transporteur d'alimentation (21) pour l'alimentation des articles en forme de tige (2) sous la forme d'un flux massique et un second transporteur (22) recevant les articles en forme de tige (2) sous la forme d'un flux massique sont fixés à l'appareil (1).
